# EUROPEAN PATENT APPLICATION

(11) **EP 1 808 368 A1**
(43) Date of publication of application: **18.07.2007**
(21) Application number: 07008889.3
(22) Date of filing: 21.03.2005
(51) Int. Cl.: B62M 7/02, B62K 25/28

(54) **Saddle riding type vehicle**

(30) Priority: 19.03.2004 JP 2004079599; 30.06.2004 JP 2004194550; 03.03.2005 JP 2005059651
(62) Divisional of application: 05006160.5
(71) Applicant: YAMAHA HATSUDOKI KABUSHIKI KAISHA, Iwata-shi, Shizuoka-ken 438-8501 (JP)
(72) Inventor: Kikuhara, Hiroshi, Iwata-shi Shizuoka-ken (JP); Kawase, Masao, Iwata-shi Shizuoka-ken (JP)
(74) Representative: Grünecker, Kinkeldey, Stockmair & Schwanhäusser Anwaltssozietät

(57) **Abstract**

The present invention relates to a saddle type vehicle comprising a body frame, an engine mounted on the body frame, an exhaust pipe extending backward from the engine, a rear arm swingable about a pivot shaft attached to the body frame, a rear wheel supported by a rear part of the rear arm, and a cushion unit connecting the body frame and the rear arm, wherein the exhaust pipe has an upright portion extending upward from below the pivot shaft, and wherein the cushion unit is located below the pivot shaft and has a longitudinally elongated shape.

## Description

The invention relates to a saddle riding type vehicle comprising a body frame, a rear wheel rotatably attached to the body frame, an engine installed on the body frame, a muffler connected to an exhaust pipe which extends from the engine in a rearward direction.

These days, a saddle riding type vehicle in which a muffler is covered by a cowl, etc. is well known in the art. Besides, Japanese Registration Utility Model No. 2513425 and Japanese Patent No. 2723311 disclose that a passage through which air can flow is defined between a muffler and a cowl to allow heat existing between the muffler and the cowl to be discharged to the outside when the saddle riding type vehicle runs.

However, in the case that the saddle riding type vehicle is stopped or runs at a low speed, since it is difficult of air to flow through the passage defined between the muffler and the cowl, the heat existing between the muffler and the cowl cannot be efficiently discharged to the outside.

It is, therefore, an object of the invention to provide a saddle riding type vehicle in which the arrangement of the exhaust pipe and the cushion unit is improved, even when the exhaust pipe extends upward behind the pivot shaft of the rear arm bracket.

This object is solved in an inventive manner by a saddle type vehicle comprising a body frame, an engine mounted on the body frame, an exhaust pipe extending backward from the engine, a rear arm swingable about a pivot shaft attached to the body frame, a rear wheel supported by a rear part of the rear arm, and a cushion unit connecting the body frame and the rear arm, wherein the exhaust pipe has an upright portion extending upward from below the pivot shaft, and wherein the cushion unit is located below the pivot shaft and has a longitudinally elongated shape.

Preferably, a front exhaust pipe connected to a front exhaust port of the engine, and a rear exhaust pipe connected to a rear exhaust port are provided, said front and rear exhaust pipes being joined to form a collection exhaust pipe having the upright portion.

In the following, the invention will be described in greater detail by means of preferred embodiments thereof with reference to the attached drawings, wherein:
- Fig. 1: is a view illustrating an outer appearance of a saddle riding type vehicle in accordance with a first embodiment,
- Fig. 2: is a schematic view illustrating a cooling device and its neighboring main component elements according to the first embodiment,
- Fig. 3: is a view illustrating the neighboring main component elements of the cooling device according to the first embodiment,
- Fig. 4: is a perspective view illustrating a main part of the saddle riding type vehicle according to the first embodiment,
- Fig. 5: is a view illustrating an outer appearance of a saddle riding type vehicle in accordance with a second embodiment,
- Fig. 6: is a side view illustrating a saddle riding type vehicle according to a third embodiment,
- Fig. 7: is a plan view illustrating the saddle riding type vehicle according to the third embodiment,
- Fig. 8: is a rear view illustrating the saddle riding type vehicle according to the third embodiment,
- Fig. 9: is a plan view illustrating a body frame which is used in the saddle riding type vehicle according to the third embodiment,
- Fig. 10: is a side view illustrating the body frame according to the third embodiment,
- Fig. 11: is a side view illustrating a main frame member according to the third embodiment,
- Fig. 12: is a view illustrating a front half of a down tube according to the third embodiment,
- Fig. 13: is a view illustrating a rear half of the down tube according to the third embodiment,
- Fig. 14: is a view illustrating a rear frame according to the third embodiment,
- Fig. 15: is a perspective view illustrating a connection part between a front end of a muffler cover and the main frame member according to the third embodiment,
- Fig. 16: is a plan view illustrating an inner cover of the muffler cover according to the third embodiment,
- Fig. 17: is a plan view illustrating the muffler cover according to the third embodiment,
- Fig. 18: is a side view illustrating the muffler cover according to the third embodiment, and
- Fig. 19: is a sectional view illustrating the muffler cover according to the third embodiment.

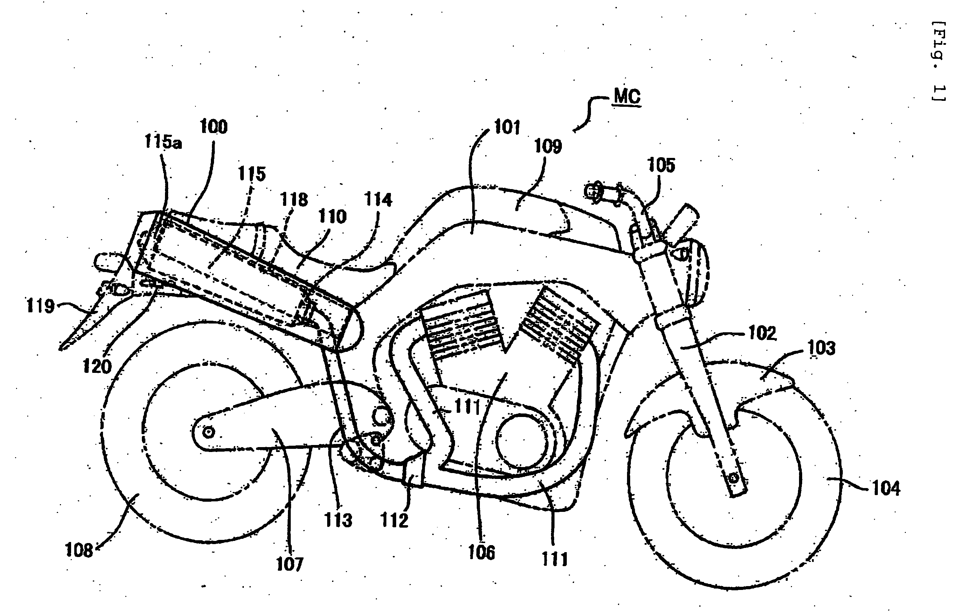

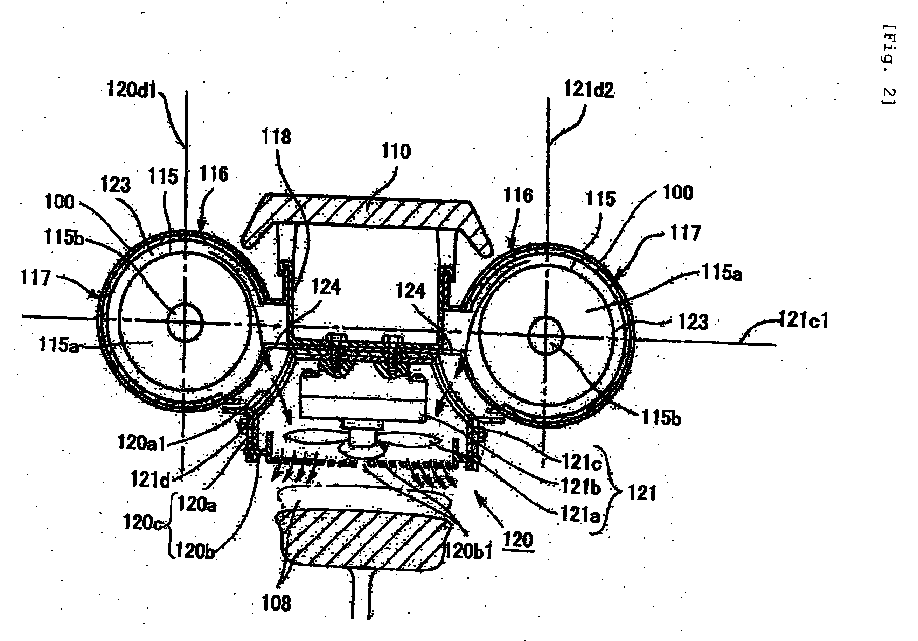

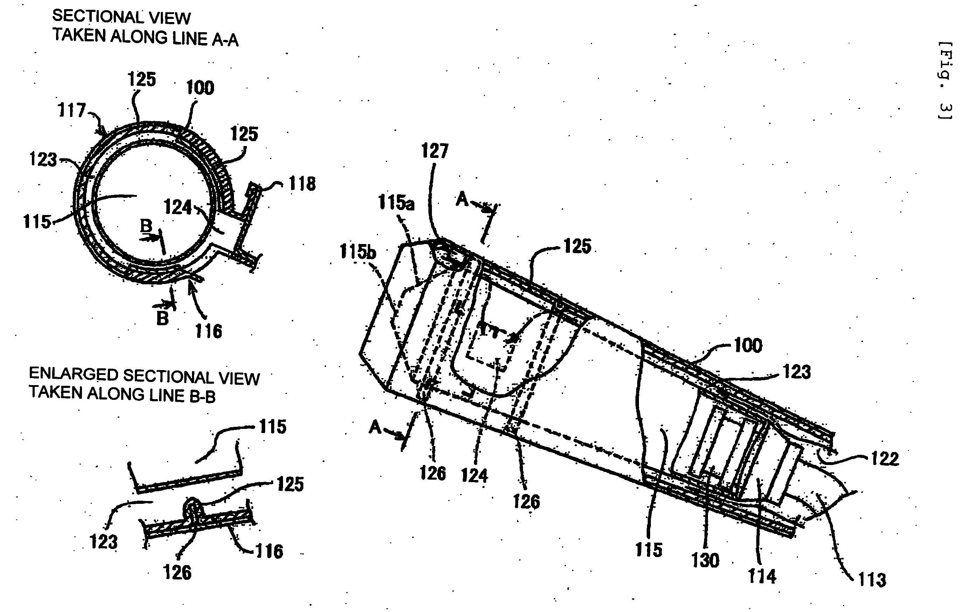

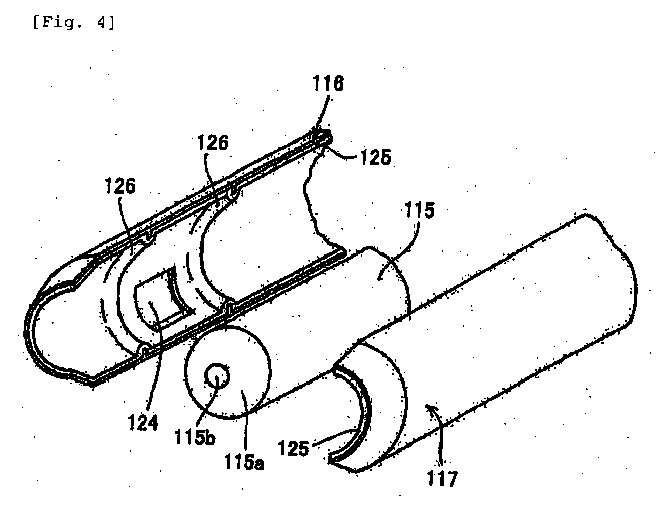

In the following, a first embodiment will be described. Therein: Fig. 1 is a side view illustrating main component elements of a saddle riding type vehicle in accordance with a first embodiment. Fig. 2 is a schematic view taken by viewing the saddle riding type vehicle shown in Fig. 1 from the rear. Fig. 3 is schematically sectional views illustrating several component elements of the saddle riding type vehicle shown in Fig. 1. Fig. 4 is a perspective view illustrating a part of the saddle riding type vehicle shown in Fig. 1.

In Fig. 1, the reference symbol MC designates a saddle riding type vehicle on which a rider can ride by outstretching legs. The saddle riding type vehicle comprises a body frame 101, a front fork 102 rotatably mounted to a front end of the body frame 101, and a front fender 103 installed on a portion of the front fork 102. A front wheel (tire) 104 is rotatably mounted to a lower end of the front fork 102, and a steering handle 105 is mounted to an upper end of the front fork 102. A 'V'-shaped two-cylinder air-cooling type engine (heat resistant engine) 106 is installed below the body frame 101. A swing arm 107 is pivotably mounted to a lower rear end of the body frame 101, and a rear wheel (tire) 108 is rotatably mounted to a distal end of the swing arm 107. A fuel tank 109 is installed on the body frame 101, and a seat 110 is installed to extend from the fuel tank 109 installed on the body frame 101 toward a position above the rear wheel 108.

Among two pairs of front exhaust pipes 111 which are connected to exhaust ports of the engine 106 at both sides of the saddle riding type vehicle, two front exhaust pipes 111 which are provided on each side of the saddle riding type vehicle are joined with each other at a joining part 112 (only two front exhaust pipes 111 provided on one side of the saddle riding type vehicle are illustrated, and only one joining part 112 is illustrated). A muffler (silencer) 115 is connected to a rear end 114 of a rear exhaust pipe 113 which extends rearward from the joining part 112 (only one rear exhaust pipe 113 is illustrated). A cover member (cowl) 100 which has a cylindrical configuration surrounds a circumferential outer surface of the muffler 115. The cover member 100 comprises a semi-cylindrical fender 116 and a semi-cylindrical side cover 117. A rear frame 118 is installed to be connected to the body frame 101 below the seat 110 and above the rear wheel 108. A pair of mufflers 115 are installed at both sides of the rear frame 118. By this fact, an air discharge device 120 as will be described below can be installed in a space defined between the pair of mufflers 115.

The heat discharge device (a cooling device) 120 is disposed in a space which is surrounded by a rear fender 119 extending from the rear frame 118 above the rear wheel 108, a pair of mufflers 115, the rear wheel 108 and the rear frame 118. The heat discharge device 120 is securely held with respect to the rear frame 118 by a holding member which extends through the cover member 100.

The heat discharge device 120 is connected to a heat insulation space 123 which is defined between the muffler 115 and the cover member 100. The heat discharge device 120 functions to discharge air existing in the heat insulation space 123 to the outside and to cool the heat generated by the rearward embedded type muffler 115.

The cover member 100 has an air suction port 122 through which air is introduced into the heat insulation space 123 and an air discharge port 124. Due to this fact, the air existing in the heat insulation space 123 can be effectively discharged to the outside.

A heat insulation sheet 125 is installed on a circumferential inner surface of the cover member 100 at least adjacent to the air discharge port 124 to insulate heat generated adjacent to the air discharge port 124. Ribs 126 are projectedly formed on the circumferential inner surface of the cover member 100 adjacent to the air discharge port 124. By this fact, the air existing in the heat insulation space 123 can be effectively discharged through the air discharge port 124.

A catalyst 130 is installed on a circumferential inner surface of the muffler 115 upstream of the air discharge port 124 of the heat insulation space 123. The catalyst 130 is composed of ceramic which is coated with noble metal such as platinum, palladium, rhodium, etc. and a filter. The catalyst 130 functions to cause a chemical reaction of hydrocarbon (HC) contained in unburned gas and bum noxious carbon monoxide in the muffler 115. Therefore, it is possible to efficiently purify exhaust gas.

A muffler cap 115a is installed at an exhaust outlet 115b of the muffler 115.

Due to the fact that the two front exhaust pipes 111 which are provided on each side of the saddle riding type vehicle and extend rearwards from the 'V'-shaped two-cylinder air-cooling type engine 106 are joined with each other at the joining part 112, two rear exhaust pipes 113 extend rearwards and upwards from the joining parts 112. The pair of left and right mufflers 115 is respectively connected to the ends 114 of the rear exhaust pipes 113. The pair of left and right mufflers 115 is located at both sides of the seat (tandem seat) 110 for a driver and a rider which are placed above the rear wheel 108, and slopingly extend rearwards and upwards.

The heat discharge device 120 according to this first embodiment is installed in a space (which is not employed in the conventional art) which is defined in a rear part of the saddle riding type vehicle and is delimited by the left and right mufflers 115, the rear wheel 108 supported by the pivotable swing arm 107 (at an uppermost position when the rear wheel 108 is moved upward and downward), and the rear frame 118. For this reason, the air of a high temperature which exists in the heat insulation space 123 can be efficiently discharged to the outside through the space while not deteriorating an outer appearance of the saddle riding type vehicle.

The heat discharge device 120 comprises a case 120c which includes an upper cover 120a and a lower cover 120b coupled to the upper cover 120a, and a fan unit 121 which is accommodated in the case 120c. The upper cover 120a has a suction opening 120a1 which communicates with the heat insulation space 123, and a bottom wall of the lower cover 120b has a discharge opening 120b1 which is opposite to the seat 110 and through which the air sucked from the heat insulation space 123 by the fan unit 121 can be discharged to the outside. By this fact, it is possible to prevent heat from being transferred to a rider.

The fan unit 121 is located below a center of the exhaust outlet 115b which is defined at a rear end of the muffler 115. Thus, it is possible to prevent a widthwise size of the saddle riding type vehicle from increasing due to the provision of the fan unit 121. The fan unit 121 comprises a fan 121 a, a motor 121b for rotating the fan 121 a, and a motor fastening part 121 c for fastening the motor 121 b to the rear frame 118. The motor 121 b is fastened to the rear frame 118 by the motor fastening part 121 c.

The motor fastening part 121c has a fan opening 121d at a position which corresponds to the suction opening 120a1 of the upper cover 120a. Hence, the air existing in the heat insulation space 123 can be reliably guided into the case 120c.

The fan unit 121 according to the first embodiment comprises an electric fan unit wherein the fan 121 a is rotated by the motor 121 b which employs a battery as its power source. Through the rotation of the fan 121a, a low pressure zone is created adjacent to the discharge opening 120b1 which is defined in the bottom wall of the lower cover 120b. Accordingly, the air sucked through the air suction port 122 (see Fig. 3) defined between the muffler 115 and the cover member 100 at the end 114 of the rear exhaust pipe 113, which is connected to a front end of the muffler 115, passes through the heat insulation space 123 (an air flowing passage) defined between the circumferential outer surface of the muffler 115 and the circumferential inner surface of the cover member 100, cools the muffler 115 and the cover member 100 (comprising the fender 116 and the side cover 117), and is warmed up by the heat of the muffler 115 and the cover member 100. Then, the warmed-up air sequentially passes through the air discharge port 124 which is defined through the fender 116 and the suction opening 120a1 of the upper cover 120a of the heat discharge device 120 and is discharged toward the rear wheel 108 through the discharge opening 120b1 which is defined through the bottom wall of the lower cover 120b (and faces the ground).

In this first embodiment, at least one additional suction opening for introducing air into the heat insulation space 123 may be defined through a wall of the side cover 117. A louver capable of changing an air flowing direction may be installed in the discharge opening 120b1 of the lower cover 120b, as a result of which warmed-up air can be efficiently discharged to a space between the fender 116 and the rear wheel 108.

The fender 116 and the side cover 117 constitute the cover member 100 having a cylindrical configuration and surround the circumferential outer surface of the muffler 115. The heat insulation sheet 125 (having a thickness of 0.1~4 mm) is attached to the inner surfaces of the fender 116 and the side cover 117 adjacent to the air discharge port 124 (see Fig. 3). The heat insulation sheet 125 may be attached only to the inner surface of the fender 116.

The air discharge port 124 defined through each of the left and right fenders 116 communicates with the suction opening 120a1 defined through the upper cover 120a of the heat insulation device 120. The low pressure zone is created adjacent to the discharge opening 120b1 by the fan unit (a cooling fan unit) 121, by which air flow is created in the heat insulation space 123 defined between the muffler 115 and the cover member 100. Consequently, as the heated air is discharged toward the rear wheel 108 through the discharge opening 120b1 defined in the lower cover 120b, the heated air is prevented from being transferred to the rider.

As can be readily seen from Fig. 2, the fan unit 121 of the heat discharge device 120 is attached to the rear frame 118 at a region (a fan space) adjacent to the rear wheel 108 in a space which is delimited by a horizontal axis 121c1 passing through centers of the exhaust outlets 115b (tail pipes) of the left and right muffler caps 115a and vertical axes 121d1 and 121 d2 respectively passing through the centers of the exhaust outlets 115b of the left and right muffler caps 115a.

Also, in place of the fan unit 121 installed in the fan space, a pair of electric fans may be installed adjacent to the pair of suction openings 120a1, respectively. Moreover, in addition to the fan unit 121, the pair of electric fans may be installed adjacent to the pair of suction openings 120a1, respectively.

When viewed on a section taken by passing through the exhaust outlets 115b of the left and right muffler caps 115a, the air discharge port 124 defined through each of the left and right fenders 116 vertically passes through the horizontal axis 121c1 which is defined by a line connecting the centers of the exhaust outlets 115b of the left and right muffler caps 115a and has a predetermined vertical length.

Due to the fact that a plurality of ribs 126 (prominent members) are projectedly formed in the contact vicinity of inner surface of the fender 116 which surrounds the muffler 115 (that is, at a region which is liable to be heated), the air flowing passage (of a thickness of about 15 mm) for efficient flow of air from the front end of the muffler 115 toward the rear end of the muffler 115 is defined in the heat insulation space 123 defined between the muffler 115 and the cover member 100. The ribs 126 are covered with the heat insulation sheet 125.

In the first embodiment, the ribs 126 are not necessarily needed, and without the ribs 126, an original purpose of ensuring reliable air flow can be achieved.

The catalyst 130 is located on a portion of the circumferential outer surface of the muffler 115 which is most likely to be heated (the circumferential outer surface of the muffler 115 reaches a temperature of about 400°C). A temperature sensor 127 is installed adjacent to the catalyst 130 (see Fig. 3). In response to a signal from the temperature sensor 127, the fan unit 121 is turned on or off and a rotational speed of the fan 121a is controlled.

In a normal running condition, air is introduced into the heat insulation space 123 through the air suction port 122 defined at the front end of the muffler 115. If the muffler 115 is cooled, a temperature sensed by the temperature sensor 127 is less than a predetermined temperature. In this situation, the fan unit 121 is turned off, or an rpm of the fan 121 a is controlled to be decreased.

In the case that the saddle riding type vehicle is stopped or runs at a low speed, a sufficient amount of air is not introduced into the heat insulation space 123 through the air suction port 122 defined at the front end of the muffler 115, and a temperature sensed by the temperature sensor 127 is higher than the predetermined temperature. At this time, the fan unit 121 is turned on, and an rpm of the fan 121a is controlled to be increased.

The fan unit 121 controls a rotational speed of the fan 121a in response to a signal from the temperature sensor 127. For example, when a temperature sensed by the temperature sensor 127 is high, a rotational speed of the fan 121a is increased, and when a temperature sensed by the temperature sensor 127 is low, a rotational speed of the fan 121a is decreased.

Even when the engine 106 is stopped, in the case that a temperature of the muffler 115 sensed by the temperature sensor 127 is higher than the predetermined temperature, the fan unit 121 may be driven.

The fan unit 121 installed in the heat discharge device 120 according to the first embodiment, which is installed in the heat discharge device 120, is not limited to the electric fan, and instead, a fan unit employing a hydraulic motor as a driving source, a fan unit driven by exhaust gas, etc. can be adopted.

Further, while the saddle riding type vehicle according to the first embodiment may have a 'V'-shaped four-cylinder engine. In this case, two pairs of the front exhaust pipes are connected by joining parts, respectively.

The pair of left and right mufflers 115, the present invention is not limited to the number of mufflers. Therefore, the saddle riding type vehicle may have a single muffler.

### (Second Embodiment)

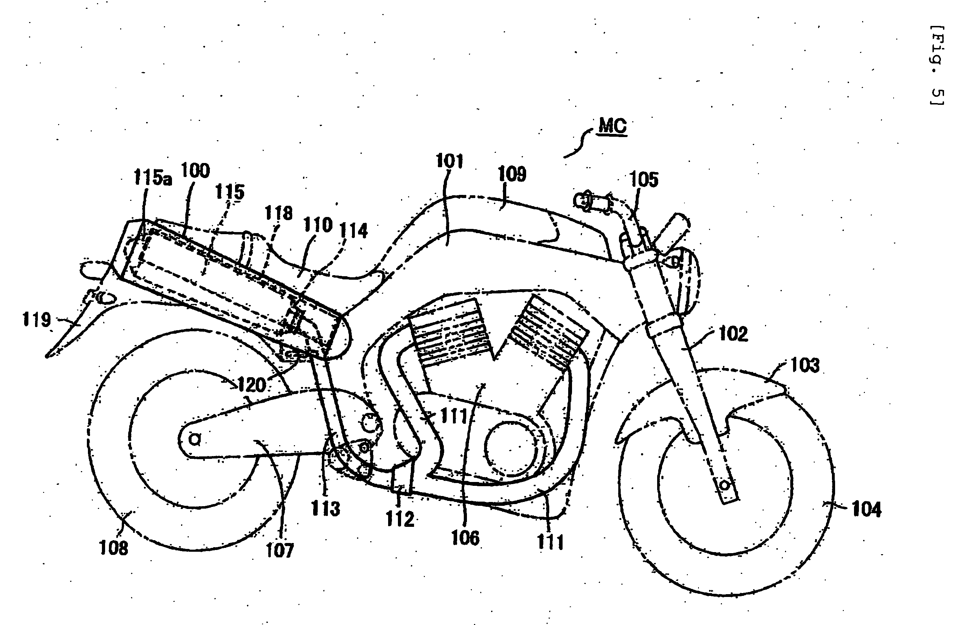

Hereafter, a saddle riding type vehicle according to a second embodiment will be described. In the following explanation, differences between the second and first embodiments will be mainly described. Fig. 5 is a schematic view illustrating a main part of the saddle riding type vehicle according to the second embodiment.

As shown in Fig. 5, in this second embodiment, the heat discharge device 120 is located in a space which is surrounded by the mufflers 115, the swing arm 107 and the rear wheel 108. The heat discharge device 120 is connected to the heat insulation space 123 which is defined by the exhaust outlet 115b and the cover member 100, and functions to discharge air existing in the heat insulation space 123 to the outside.

By the saddle riding type vehicle according to this second embodiment, the same effects as those of the first embodiment can be achieved.

### (Third Embodiment)

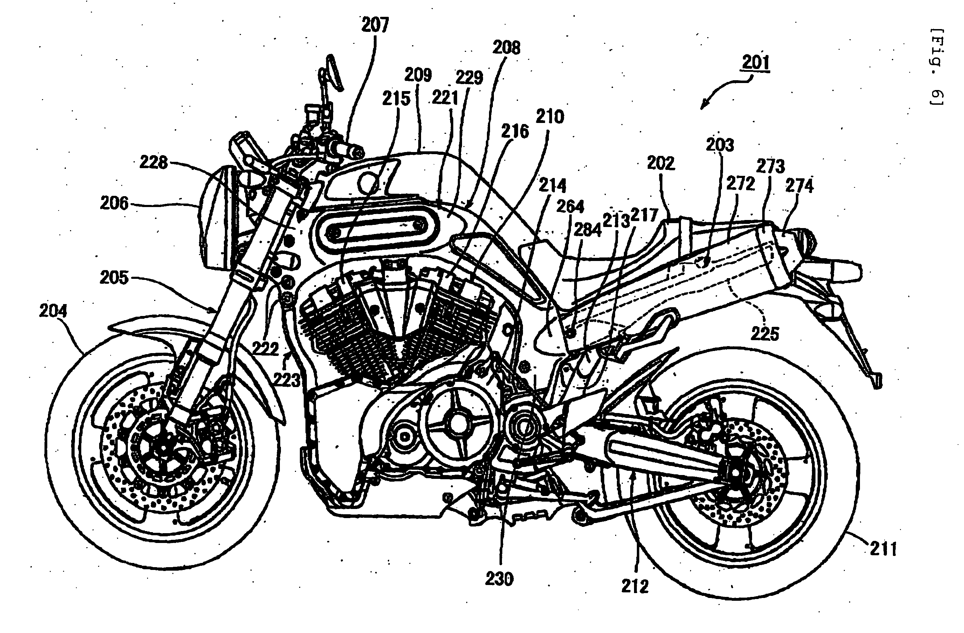

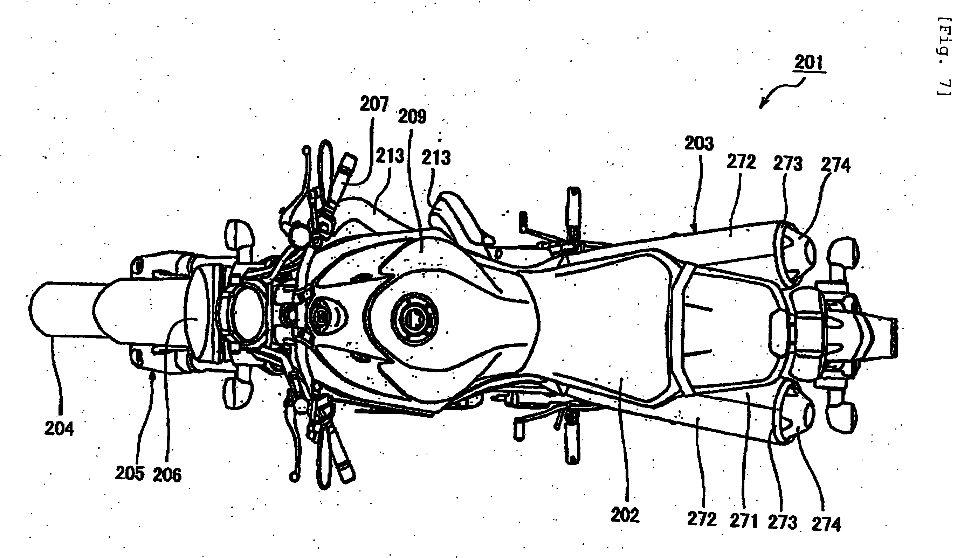

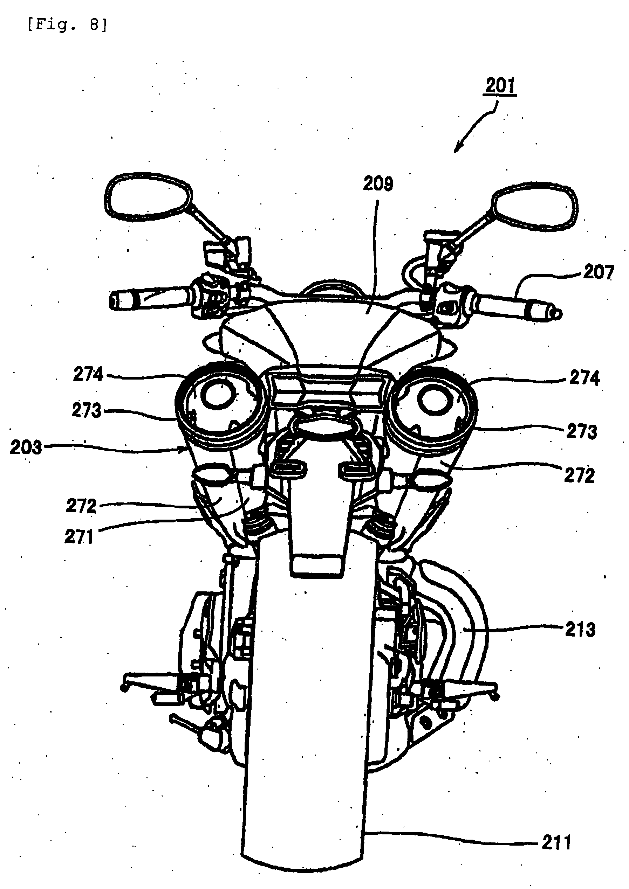

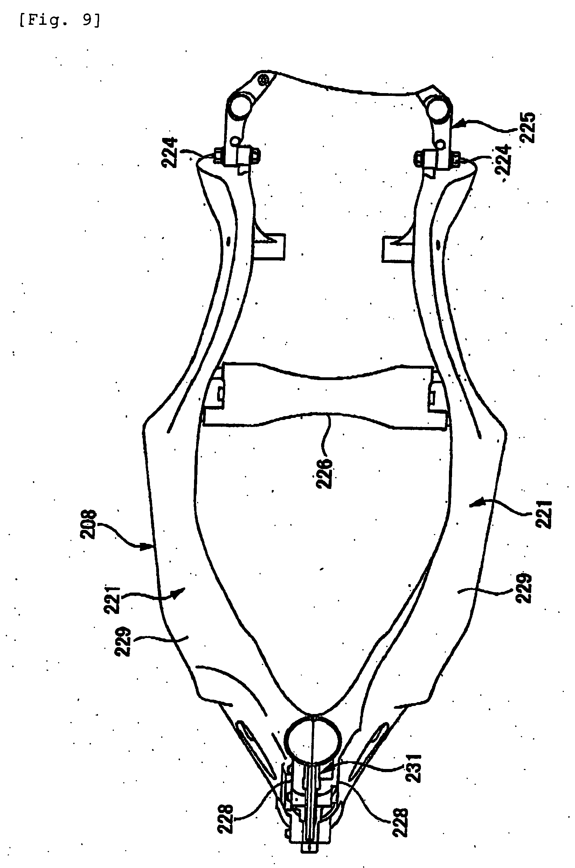

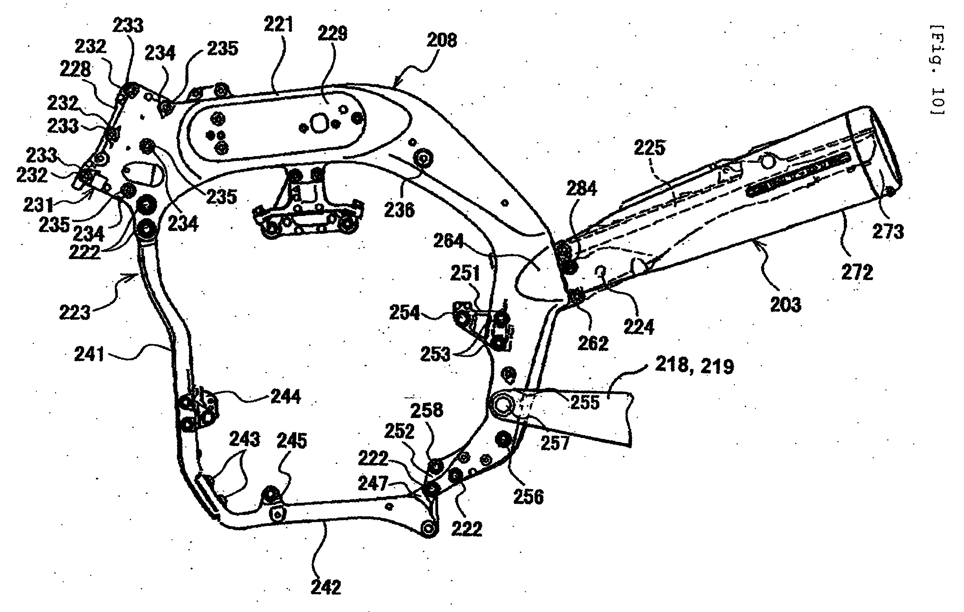

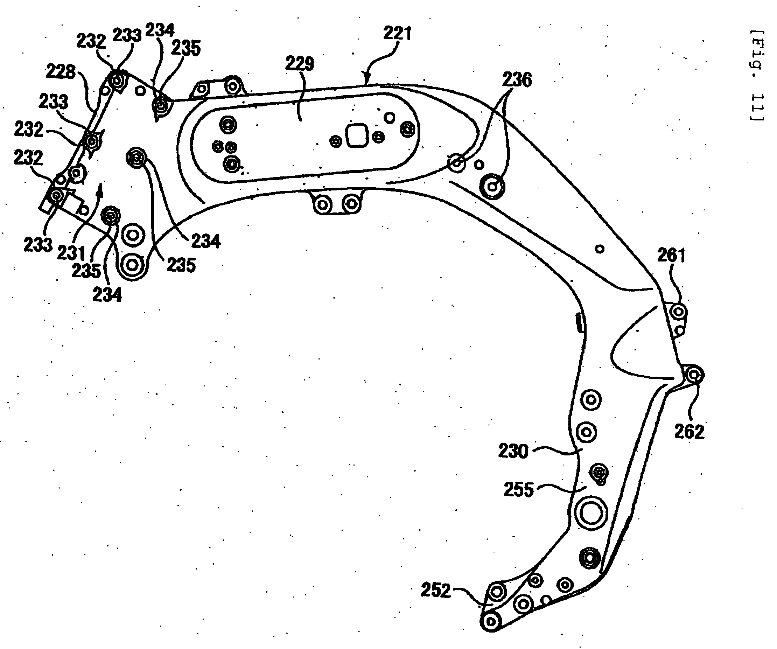

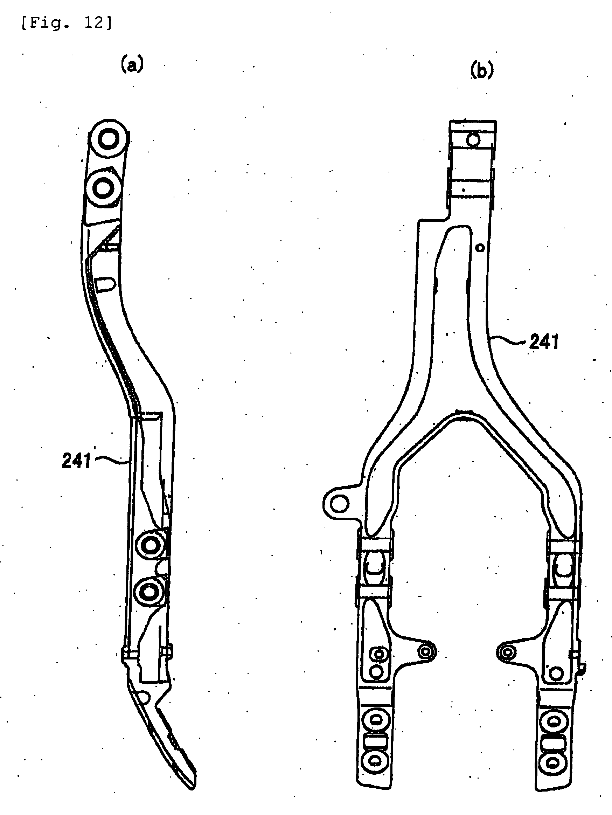

Hereinbelow, a saddle riding type vehicle in accordance with a third embodiment will be described with reference to the attached drawings. Fig. 6 is a side view illustrating the saddle riding type vehicle according to the third embodiment, Fig. 7 is a plan view of the saddle riding type vehicle, and Fig. 8 is a rear view of the saddle riding type vehicle. Fig. 9 is a plan view illustrating a body frame which is used in the saddle riding type vehicle according to the third embodiment, Fig. 10 is a side view of the body frame, and Fig. 11 is a side view of a main frame member. Fig. 12 is of views illustrating a front half of a down tube, wherein Fig. 12(a) is a side view of the down tube and Fig. 12(b) is a rear view of the down tube.

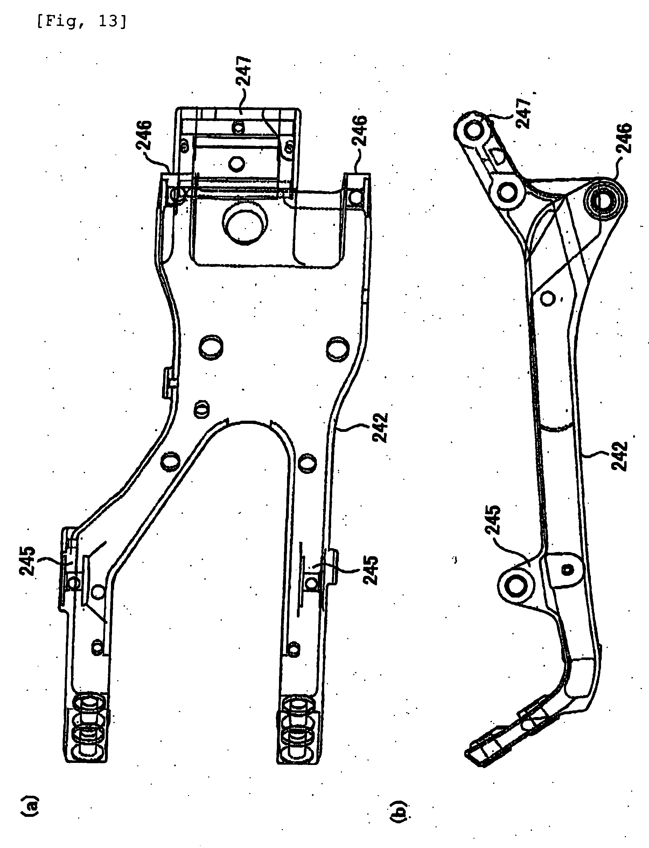

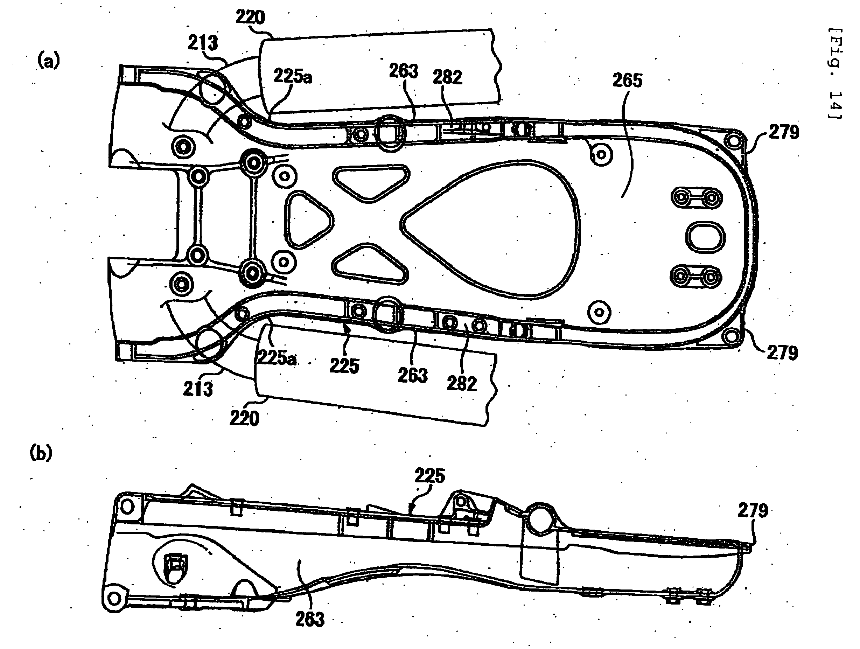

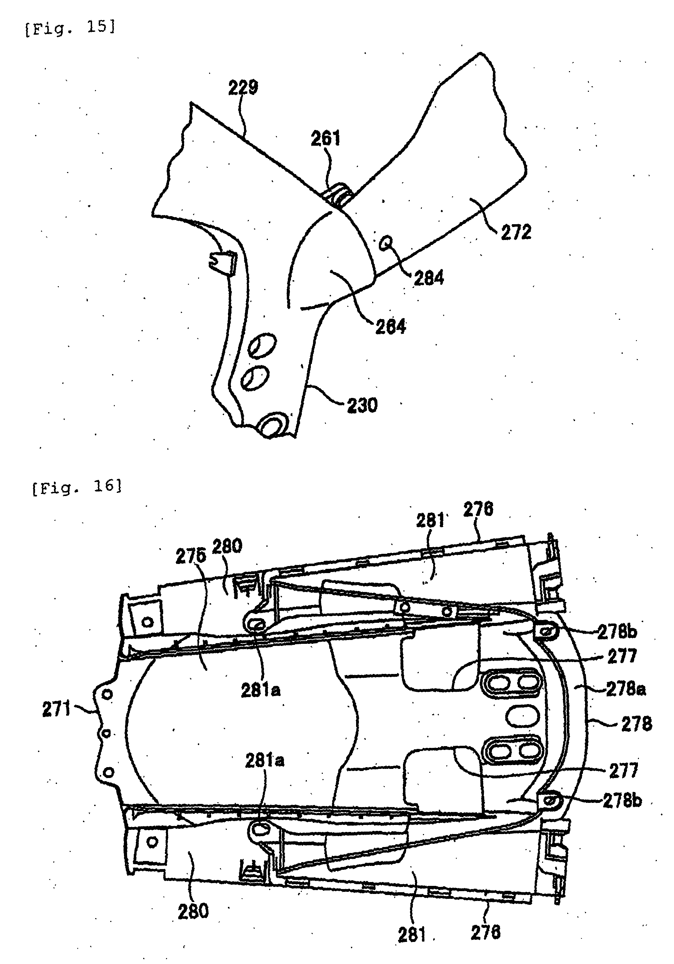

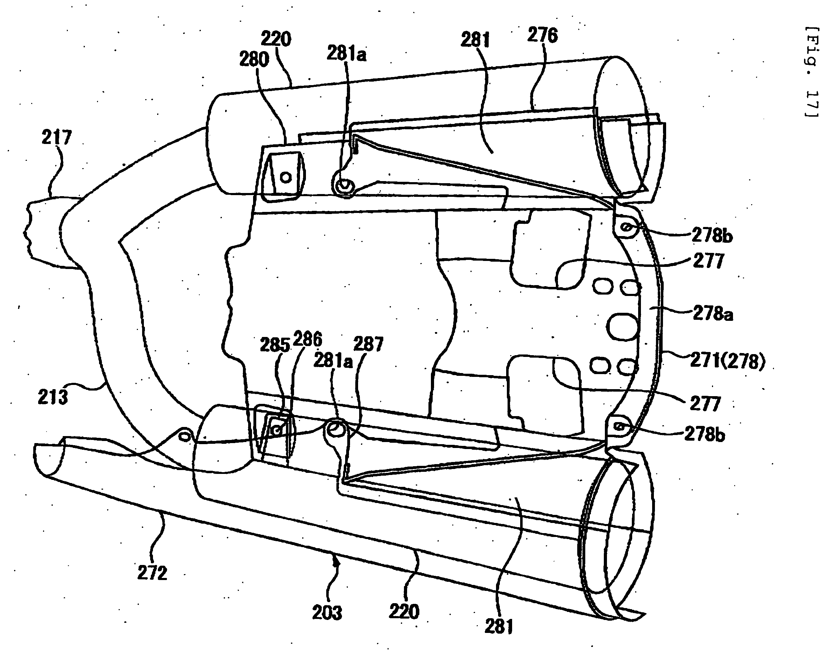

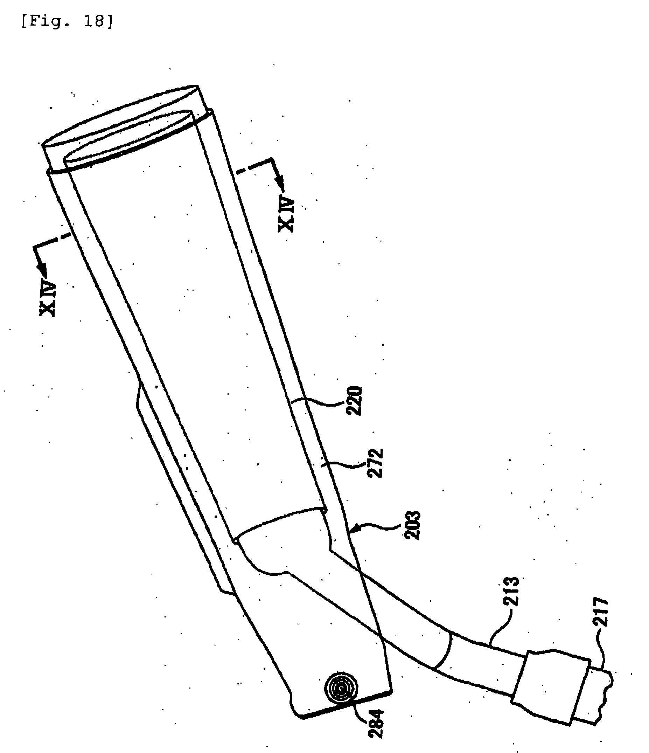

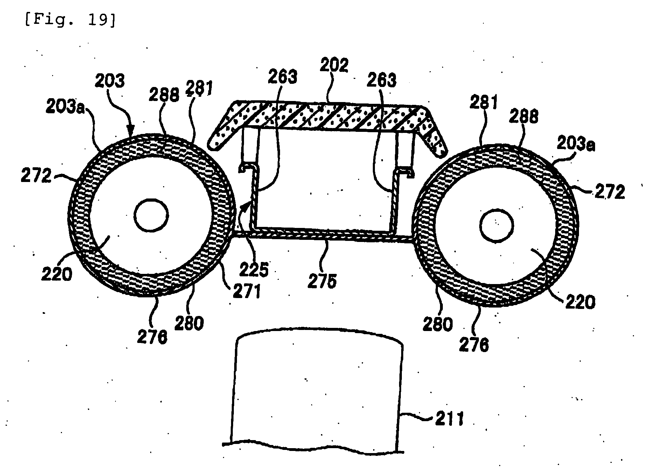

Fig. 13 is of views illustrating a rear half of the down tube, wherein Fig. 13(a) is a plan view of the down tube and Fig. 13(b) is a side view of the down tube. Fig. 14 is of views illustrating a rear frame, wherein Fig. 14(a) is a plan view of the rear frame and Fig. 14(b) is a side view of the rear frame. Fig. 15 is a perspective view illustrating a connection part between a front end of a muffler cover and the main frame member, and Fig. 16 is a plan view of an inner cover of the muffler cover. Fig. 17 is a plan view of the muffler cover, illustrating a state in which an outer cover provided on a right side of the saddle riding type vehicle is removed. Fig. 18 is a side view of the muffler cover, and Fig. 19 is a sectional view taken along the line XIV-XIV of Fig. 18.

In a saddle riding type vehicle 201, a muffler cover 203 is installed at a substantial height at a side of a seat 202 to extend slightly downward from the seat 202 so that it can be viewed from the side. The saddle riding type vehicle 201 comprises a front wheel 204, a front fork 205, a headlight 206, a steering handle 207, a body frame 208, a fuel tank 209, an engine 210, a rear wheel 211, a rear arm 212, and exhaust pipes 213. The engine 210 of the saddle riding type vehicle 201 comprises a 'V'-shaped two-cylinder air-cooling type engine. In this engine 210, as shown in Fig. 6, a front cylinder 215 and a rear cylinder 216 are connected with each other on an upper end of a crankcase 214 to define a 'V'-shaped configuration when viewed from the side.

The exhaust pipes 213 of the engine 210 extend from the cylinders 215 and 216 rightward of the saddle riding type vehicle. As shown in Fig. 8, the exhaust pipe 213 of the front cylinder 215 and the exhaust pipe 213 of the rear cylinder 216 are formed to extend downward from the engine 210, and are joined with each other at a joining pipe 217 (see Fig. 6) behind the crankcase 214. The joining pipe 217 passes between a pair of left and right connections arms 218 and 219 (see Fig. 10) of the rear arm 212 and then between rear arm brackets as will be described later and the rear wheel 211 to extend upwards. A catalytic converter (not shown) is installed in the course of the joining pipe 217. While the catalytic converter is placed under a high temperature condition, since the catalytic converter is located at a position separated from the muffler cover 203, no problem is caused even when the muffler cover 203 is formed of synthetic resin. As shown in Fig. 17, an upper end of the joining pipe 217 is divided into two branches which are respectively connected to a pair of left and right mufflers 220 received in the muffler covers 203.

As can be readily seen from Figs. 9 and 10, the body frame 208 of the saddle riding type vehicle 201 has a so-called cradle-shaped configuration which surrounds the engine 210 when viewed from the side. The body frame 208 comprises a pair of left and right main frame members 221 which are formed into a desired shape by casting, a down tube 223 which is coupled to the main frame members 221 by coupling bolts 222, a rear frame 225 which is coupled to rear ends of the main frame members 221 by coupling bolts 224 (see Fig. 10), and a cross member 226 which is horizontally fastened at both ends thereof to middle portions of the main frame members 221. The main frame members **221** and the rear frame 225 are formed of aluminum alloy into desired shapes by die casting. The coupling bolts 222 constitute assembling members of the present invention. The mufflers 220 are installed at both sides of the rear frame 225 to extend along the rear frame 225 and conceal both sides of the rear frame 225.

In each of the left main frame member 221 and the right main frame member 221, a head pipe half 228 for rotatably supporting a steering shaft (not shown) of the front fork 205, a main frame 229 which extends rearwards from the head pipe half 228, and a rear arm bracket 230 which extends downwards from the main frame 229 to support the rear arm 212 are integrally formed with one another.

When viewed from the top, the head pipe half 228 has a 'U'-shaped section which is opened toward a widthwise center of a vehicle body. Therefore, by coupling the left head pipe half 228 and the right head pipe half 228 with each other, a head pipe 231 is constructed.

Referring to Figs. 10 and 11, coupling of these head pipe halves 228 is implemented in a manner such that three front locking parts 232 formed on front ends of the head pipe halves 228 are respectively coupled with each other by coupling bolts 233, and three rear locking parts 234 formed on rear ends of the head pipe halves 228 are respectively coupled with each other by coupling bolts 235. When coupling the head pipe halves 228 to constitute the head pipe 231 according to this third embodiment, bearings (not shown) for supporting the steering shaft are respectively fitted into upper and lower ends of the head pipe 231.

The main frame 229 is formed to have a 'U'-shaped section which is opened toward the widthwise center of the vehicle body, and reinforcing ribs (not shown) are installed in the main frame 229. As can be readily seen from Fig. 9, the main frame 229 of the left main frame member 221 and the main frame 229 of the right main frame member 221 are separated from each other in the widthwise direction of the vehicle body, behind the head pipe halves 228, and are connected with each other by the cross member 226 (see Fig. 10). The cross member 226 is fastened at both ends thereof to the main frames 229 by fastening bolts 236 (see Fig. 9).

Referring to Fig. 10, the down tube 223 is composed of a front down tube half 241 which longitudinally extends in front of the engine 210 and a rear down tube half 242 which transversely extends below the engine 210. While the down tube 223 according to this third embodiment does not comprises a tubular body, since the down tube 223 has the same function as a conventional cradle type down tube, the down tube 223 is named in this embodiment as it is.

The front down tube half 241 and the rear down tube half 242 which constitute the down tube 223 are coupled with each other by coupling bolts 243. An upper end of the front down tube half 241 is coupled to lower ends of the head pipe halves 228 by the coupling bolts 222, and a rear end of the rear down tube half 242 is coupled to lower ends of the rear arm brackets 230 by the coupling bolts 222.

The front down tube half 241 of the down tube 223 is formed into a desired shape by forging. As shown in Figs. 6 and 9, when viewed from the side, the front down tube half 241 has a contour which substantially conforms to a front contour of the engine 210. Also, as shown in Fig. 12(b), the front down tube half 241 is bifurcated downwards. The upper end of the front down tube half 241 is fitted between the left main frame member 221 (the left head pipe half 228) and the right main frame member 221 (the right head pipe half 228) and is assembled by the coupling bolts 222 which pass through the left and right main frame members 221. That is to say, the upper end of the front down tube half 241 is positioned between the pair of left and right main frame members 221.

Referring to Fig. 9, the front down tube half 241 has engine support brackets 244 attached to a lower part thereof and supports a front end of the crankcase 214 through the engine support brackets 244. Referring to Fig. 10, a lower end of the front down tube half 241 and a front end of the rear down tube half 242 are connected with each other by coupling bolts 243 in a state in which the rear down tube half 242 is overlapped on the front down tube half 241.

As shown in Fig. 13, the rear down tube half 242 of the down tube 223 is formed by casting and is bifurcated forward of the vehicle body. The down tube 223 has a hollow interior. Front portions of the rear down tube half 242 have integrally formed therewith engine support brackets 245 and support a front lower end of the crankcase 214 through the engine support brackets 245. Cushion unit connection brackets 246 and a rear arm bracket connection bracket 247 are projectedly formed on the rear end of the rear down tube half 242. The cushion unit connection brackets 246 are formed to define a left and right pair, and the rear arm bracket connection bracket 247 is formed to extend from the widthwise center of the vehicle body in lengthwise and widthwise directions of the vehicle body.

The rear arm bracket connection bracket 247 is fitted between the left rear arm bracket 230 and the right rear arm bracket 230 and assembled by the two coupling bolts 222 which pass through the left and right rear arm brackets 230. In other words, the rear end of the rear down tube half 242 of the down tube 223 is positioned between the pair of left and right rear arm brackets 230.

As in the case of the main frame 229, the rear arm bracket 230 is formed to have a 'U'-shaped section which is opened toward the widthwise center of the vehicle body, and a plurality of reinforcing ribs are installed in the rear arm bracket 230. The rear arm bracket 230 of the left main frame member 221 and the rear arm bracket 230 of the right main frame member 221 are coupled with each other adjacent to their rear arm support parts 255 by coupling bolts 256 (see Fig. 10).

As shown in Fig. 10, the rear arm brackets 230 support a rear end of the crankcase 214 by support brackets 251 secured to upper ends thereof and projections 252 formed at lower ends thereof. The support brackets 251 are fitted between the pair of rear arm brackets 230 and assembled by bolts 253 which pass through the pair of rear arm brackets 230. The support brackets 251 are fastened to the crankcase 214 by bolts 254. The projections 252 are assembled to the crankcase 214 by bolts 258 which pass through the crankcase 214. Due to this fact, both rear arm brackets 230 are connected to each other in an engine support section via the support brackets 251 and the engine 210.

As can be readily seen from Fig. 10, the rear arm brackets 230 pivotably support the connection arms 218 and 219 of the rear arm 212 through pivot shafts 257.

As shown in Fig. 11, rear frame support brackets 261 and 262 are projectedly formed on a rear portion of the upper end of the rear arm support bracket 230. These brackets 261 and 262 are installed at two points separated in up and down direction from each other and are provided at four points on the left and right rear arm brackets 230.

As best shown in Fig. 14, the rear frame 225 attached to these brackets 261 and 262 has a substantially plate-shaped contour when viewed from the side of the vehicle body. The rear frame 225 is opened upward and forward of the vehicle body and has a case-shaped configuration which extends in the lengthwise direction of the vehicle body. The rear frame 225 is inclined upward in a rearward direction toward an upper end of the rear wheel 211. The rear frame 225 is covered at both sides, a rear part and a lower part thereof by the muffler covers 203 and is covered at an upper part thereof by the seat 202, whereby the rear frame 225 is not exposed to the outside.

A side wall 263 is formed along an edge of the rear frame 225 to extend perpendicularly to a horizontal plate part 265 of the rear frame 225. A left side wall 263 and a right side wall 263 of the vehicle body has narrow width parts 225a at the widthwise center. As shown in Fig. 17, the two exhaust pipes 213 and the mufflers 220 connected to rear ends of the two exhaust pipes 213 are positioned facing the narrow width parts 225a at both sides of the vehicle body.

The side wall 263 of the rear frame 225 is formed to have a largest height at a front end thereof which is connected to the main frame member 221. An upper end of the side wall 263 has a 'U'-shaped section which is opened downward. The seat 202 is placed on an upper surface of the upper end of the side wall 263 and thereby is supported by the rear frame 225.

As shown in Figs. 6, 10 and 15, the upper end of the rear arm bracket 230 having the brackets 261 and 262 is expanded sideward of the vehicle body as if a front end of the muffler cover 203 extending rearward of the vehicle body along the rear frame 225 is stretched forward. This expanded portion 264 has a semi-conical configuration which projects sideward of the vehicle body and is opened toward the muffler cover 203.

The muffler cover 203 comprises an inner cover 271 (see Figs. 8, 16 and 19) for covering the rear frame 225 from the bottom, and a pair of left and right outer covers 272 which are coupled to outer side ends of the inner cover 271. The inner cover 271 and the outer covers 272 are made of synthetic resin material having high heat resistance. As shown in Fig. 19, the inner cover 271 and the outer covers 272 cooperatively define cylinders 203a of a circular sectional shape. As shown in Figs. 17 and 18, the muffler 220 is inserted into the cylinder 203a. As shown in figs. 6 to 8, a tail pipe 274 projected from a circular cap 273 toward rear side is projectedly coupled to a rear end of the cylinder 203a.

As shown in Fig. 16, the inner cover 271 comprises a fender part 275 which faces a lower surface of the rear frame 225, and silencer cover parts 276 which are formed integrally with both left and right ends of the fender part 275. A rear end of the fender part 275 has an opening 277 and is formed with a rear wall 278 for covering the rear frame 225 from the rear. An upper end of the rear wall 278 has a flange 278a which extends forwards from a rear edge of the rear frame 225. The flange 278a is fastened to support brackets 279 (see Fig. 14) which are formed at a rear end of the rear frame 225, by un-illustrated fastening bolts. As shown in Figs. 16 and 17, the flange 278a has bolt holes 278b through which the fastening bolts pass.

As shown in Figs. 16 and 19, the silencer cover parts 276 comprise lower portions 280 which are formed to extend sideward and downward from both sides of the fender part 275 and upper portions 281 which are formed to extend sideward and upward from a rear end of the fender part 275. The lower portion 280 and the upper portion 281 cooperatively define a semi-circular sectional shape which is opened sideward of the vehicle body. As can be readily seen from Fig. 16, a front segment of the upper portion 281 is formed to be separated from the fender part 275. A front end of the upper portion 281 is fastened by a fastening bolt to an un-illustrated support bracket which is installed on a central side wall part 282 (see Fig. 14) of the rear frame 225. As shown in Figs. 16 and 17, the upper portion 281 of the silencer cover part 276 has a bolt hole 281 a through which the fastening bolt passes.

As shown in Fig. 19, the outer covers 272 have a semi-circular sectional shape and are coupled to the inner cover 271 which has a semi-circular sectional shape. In a state in which a front end of the outer cover 272 is connected to the expanded portion 264 of the rear arm bracket 230, the outer cover 272 is supported by the rear frame 225, the rear arm bracket 230 and the inner cover 271. The front end of the outer cover 272 is formed to cover the brackets 261 and 262 from the top, the rear and the sides, and is attached to a stay (not shown) which is assembled along with the rear frame 225 to the upper bracket 261 of the brackets 261 and 262, by attaching bolts 284 (see Figs. 6, 10 and 15). Therefore, a connection region between the rear arm bracket 230 and the rear frame 225 is covered by the front end of the outer cover 272 to be prevented from being exposed out of the vehicle body. The front ends of the outer covers 272 constitute a covering section of the present embodiment.

As can be readily seen from Fig. 17, assembly of the outer covers 272 is implemented in a manner such that lower part attaching brackets 285 which are installed on lower front portions of the outer covers 272 to project inward of the vehicle body are fastened to the lower portions 280 of the inner cover 271 by attaching bolts 286, and upper part attaching brackets 287 which are installed on upper middle portions of the outer covers 272 to project inward of the vehicle body are attached to the rear frame 225 along with the upper portions 281 of the inner cover 271. While a region where the outer cover 272 and the inner cover 271 are coupled to each other to define the cylinder 203a (a region which is aligned with a center of the cylinder 203a when viewed from the top) is not concretely illustrated, edges of one of the outer cover 272 and the inner cover 271 are formed with engagement projections and edges of the other of the outer cover 272 and the inner cover 271 are defined with engagement grooves so that the engagement projections can be respectively engaged into the engagement grooves.

The muffler 220 is inserted into the cylinder 203a which is formed by the inner cover 271 and the outer cover 272. As shown in Fig. 19, a heat insulation material 288 is filled between the muffler 220 and the cylinder 203a. As the heat insulation material 288, for example, glass wool can be employed.

In the saddle riding type vehicle 201 constructed as mentioned above, the muffler 220 which is connected to the rear end of the exhaust pipe 213 is axially surrounded by the muffler cover 203, and the heat insulation material 288 is installed between the muffler cover 203 and the muffler 220. Due to this fact, in the saddle riding type vehicle 201, heat transferred from the muffler 220 to the muffler cover 203 is suppressed by the presence of the heat insulation material 288. Since, synthetic resin which forms the muffler cover 203 has heat conductivity less than that of a metallic material, when the legs of the rider sitting on the seat 202 come into contact with the muffler covers 203, unpleasant feeling is not provoked to the rider. Also, in the saddle riding type vehicle 201, because the mufflers 220 are located at both sides of the rear frame 225 to extend along and cover the rear frame 225, it is sufficient for the muffler covers 203 to cover the mufflers 220, whereby a compact outer appearance of the saddle riding type vehicle can be accomplished.

In the saddle riding type vehicle 201 according to this third embodiment, since the rear frame 225 has the plate-shaped contour when viewed from the side, the rear frame 225 can be easily covered by the mufflers 220, whereby an outer appearance of the saddle riding type vehicle can be improved.

Also, in the saddle riding type vehicle 201 according to this third embodiment, because the rear frame 225 has the narrow width parts 225a, the mufflers 225 can be located to face the narrow width parts 225a at both sides of the rear frame 225. Consequently, the mufflers 220 can be positioned adjacent to the seat 202.

Moreover, in the saddle riding type vehicle 201 according to this third embodiment, due to the fact that the rear frame 225 is formed to have the case-shaped configuration which possesses high strength, even though the narrow width parts 225a are formed adjacent to the front end of the rear frame 225, a weight of the rider can be reliably supported by the rear frame 225.

Furthermore, in the saddle riding type vehicle 201 according to this third embodiment, by the fact that the coupling bolts 224 for attaching the rear frame 225 to the main frame members 221 can be reliably covered by the muffler covers 203, an outer appearance of the saddle riding type vehicle can be further improved due to the presence of the muffler covers 203.

The above description discloses a saddle riding type vehicle comprising a body frame (a body frame 101), a rear wheel (a rear wheel 108) rotatably attached to the body frame, an engine (an engine 106) installed on the body frame, a substantially cylindrical muffler (a muffler 115) connected to an exhaust pipe (a rear exhaust pipe 113) which extends from the engine and obliquely installed rearwards of the rear wheel, and a cover member (a cover member 100) for axially surrounding the muffler, wherein a heat insulation space (a heat insulation space 123) is defined between the muffler and the cover member to insulate heat of the muffler.

Due to the fact that the heat insulation space (the heat insulation space 123) is defined between the muffler and the cover member to insulate heat of the muffler, the saddle riding type vehicle can effectively insulate heat existing between the muffler and the cover member.

Preferably, the saddle riding type vehicle further comprises a heat discharge device (a heat discharge device 120) communicated with the heat insulation space to discharge heat existing in the heat insulation space out of the heat insulation space.

Thereby, it is possible to efficiently discharge the heat existing between the muffler and the cover member.

Preferably, a seat (a seat 110) on which a driver of the saddle riding type vehicle sits is installed above the rear wheel, and the heat discharge device discharges heat toward the rear wheel.

Due to the fact that the heat discharge device can discharge heat existing between the muffler and the cover member toward the rear wheel, the saddle riding type vehicle can suppress heat from being transferred to a rider.

Preferably, the body frame includes a rear frame (a rear frame 118) which is installed above the rear wheel, the muffler is arranged outside the rear frame in a widthwise direction of the saddle riding type vehicle, and the heat discharge device is disposed in a space which is surrounded by the muffler, the rear wheel and the rear frame.

By this feature, due to the fact that the heat discharge device is disposed in the space which is surrounded by the muffler, the rear wheel and the rear frame, it is possible to prevent an outer appearance of the saddle riding type vehicle from being deteriorated due to the presence of the heat discharge device.

Preferably, the heat discharge device comprises a case (a case 120c) and a fan unit (a fan unit 121), and a bottom wall of the case has a discharge opening (a discharge opening 120b1) through which the heat discharged out of the heat insulation space by the fan unit is discharged out of the case.

By this feature, due to the fact that the heat discharge device has the discharge opening through which the heat discharged out of the heat insulation space by the fan unit is discharged out of the case, the saddle riding type vehicle can suppress heat from being transferred to a rider.

Preferably, the muffler comprises a plurality of mufflers, and the rear frame is installed between the plurality of mufflers.

By this feature, due to the fact that the rear frame is installed between the plurality of mufflers, it is possible to locate the heat discharge device by efficiently using the space which is surrounded by the plurality of mufflers, the rear wheel and the rear frame.

Preferably, the fan unit is installed below a center (a horizontal axis 121c1) of an exhaust outlet (an exhaust outlet 115b) of the muffler, through which exhaust gas of the engine is discharged to the outside.

By this feature, due to the fact that the fan unit is installed below the center of the exhaust outlet of the muffler, it is possible to prevent a widthwise size of the saddle riding type vehicle from increasing due to the presence of the fan unit.

Preferably, the cover member has an outside air suction port (an air suction port 122) through which outside air is introduced into the heat insulation space and an air discharge port (an air discharge port 124) which communicates with the heat discharge device.

By this feature, due to the fact that the cover member has the outside air suction port through which outside air is introduced into the heat insulation space and the air discharge port which communicates with the heat discharge device, the saddle riding type vehicle can efficiently discharge the heat existing between the muffler and the cover member.

Preferably, the cover member has at least one projection (a rib 126) which projects into the heat insulation space, and the projection is installed adjacent to the air discharge port.

By this feature, due to the fact that the cover member has at least one projection which projects into the heat insulation space, the saddle riding type vehicle can increase an air flow rate between the muffler and the cover member and efficiently discharge the heat existing between the muffler and the cover member.

Preferably, the case comprises an upper case part (an upper cover 120a) and a lower case part (a lower cover 120b) which is coupled to the upper case part, the upper case part has a suction opening (a suction opening 120a1) which communicates with the heat insulation space, and the lower case part has a discharge opening (a discharge opening 120b1).

By this feature, due to the fact that the case comprises the upper case part having the suction opening and the lower case part having the discharge opening, the case can be easily formed.

Preferably, the fan unit comprises a fan (a fan 121a) and an electric motor (a motor 121 b) for rotating the fan, and the electric motor is fastened to the rear frame by an electric motor fastening member (a motor fastening part 121 c).

By this feature, due to the fact that the electric motor is fastened to the rear frame by the electric motor fastening member, it is possible to securely fasten the electric motor to the rear frame.

Preferably, the electric motor fastening member has an opening (a fan opening 121 d) at a position which corresponds to the suction opening.

By this feature, due to the fact that the electric motor fastening member has the opening at the position which corresponds to the suction opening, the saddle riding type vehicle can easily introduce the heat existing between the muffler and the cover member into the case.

Preferably, a catalyst (a catalyst 130) for purifying exhaust gas of the engine is installed between the engine and the muffler closer to the engine than the air discharge port.

By this feature, due to the fact that the catalyst is installed between the engine and the muffler, the saddle riding type vehicle can efficiently purify the exhaust gas.

Preferably, the cover member comprises an outer cover part (an outer cover 272) which externally covers the muffler in the widthwise direction of the saddle riding type vehicle, and an inner cover part (an inner cover 271) which is positioned between the rear frame and the muffler.

By this feature, due to the fact that the cover member comprises the outer cover part and the inner cover part, the outer cover part can suppress the heat from being directly transmitted to a rider, and the inner cover part can suppress the heat from being transmitted to the rider by way of the body frame, etc.

Preferably, a heat insulation material (a heat insulation material 288) for insulating heat of the muffler is provided in the heat insulation space.

By this feature, due to the fact that the heat insulation material is provided in the heat insulation space, the saddle riding type vehicle can effectively suppress heat existing between the muffler and the cover member from being transmitted to a rider.

Preferably, the cover member is made of a resin material.

By this feature, due to the fact that the cover member is made of the resin material which has low heat conductivity, the saddle riding type vehicle can effectively suppress heat existing between the muffler and the cover member from being transmitted to a rider.

Preferably, a heat insulation sheet (a heat insulation sheet 125) for insulating heat of the muffler is installed on an inner surface of the cover member adjacent to the air discharge port.

By this feature, due to the fact that the heat insulation sheet is installed adjacent to the air discharge port, it is possible to effectively insulate the heat existing adjacent to the air discharge port.

Preferably, the body frame has an outer surface which has a plate-shaped contour when viewed in the widthwise direction of the saddle riding type vehicle.

By this feature, due to the fact that the body frame has the outer surface which has a plate-shaped contour when viewed in the widthwise direction of the saddle riding type vehicle, since it is possible to conceal the body frame by the muffler, etc., it is possible to prevent an outer appearance of the saddle riding type vehicle from being deteriorated.

Preferably, the rear frame has a narrow width part (a narrow width part 225a) which has a width less than that of the body frame, and the muffler is installed outside the narrow width part in the widthwise direction of the saddle riding type vehicle.

By this feature, due to the fact that the rear frame has the narrow width part which has a width less than that of the body frame, even when the muffler is installed outside the rear frame in the widthwise direction of the saddle riding type vehicle, it is possible to prevent a widthwise size of the saddle riding type vehicle from increasing.

Preferably, the rear frame has a horizontal plate part (a horizontal plate part 265) which is substantially parallel to a rotation axis of the rear wheel and a side wall part (a side wall part 263) which substantially vertically extends from an edge of the horizontal plate part, and a portion of the side wall part which is connected to the body frame has a height greater than that of the other portion of the side wall part.

By this feature, due to the fact that the rear frame has the horizontal plate part and the side wall part which substantially vertically extends from the edge of the horizontal plate part, it is possible to elevate strength of the rear frame.

Preferably, the rear frame (a rear frame 225) is connected to the body frame (a body frame 208) by a locking member (coupling bolts 224), and the locking member is covered by the cover member (a muffler cover 203).

By this feature, due to the fact that the cover member covers the locking member which connects the rear frame to the body frame, it is possible to prevent an outer appearance of the saddle riding type vehicle from being deteriorated.

Therefore, as explained above, it is possible to provide a saddle riding type vehicle capable of effectively insulating heat existing between a muffler and a cowl or the like.

As further explained above, a saddle riding type vehicle capable of effectively insulating heat existing between a muffler and a cowl or the like is provided.

According to a preferred embodiment, a saddle riding type vehicle comprises a body frame, a rear wheel rotatably coupled to the body frame, an engine attached to the body frame, a substantially cylindrical muffler connected to a rear exhaust pipe which extends from the engine and obliquely installed rearwards of the rear wheel, and a cover member for axially surrounding the muffler. In the saddle riding type vehicle, a heat insulation space is defined between the muffler and the cover member to insulate heat of the muffler.

## Claims

1. Saddle type vehicle comprising a body frame (3), an engine (4) mounted on the body frame (3), an exhaust pipe (17,18) extending backward from the engine (4), a rear arm (8) swingable about a pivot shaft (12) attached to the body frame (3), a rear wheel (7) supported by a rear part of the rear arm (8), and a cushion unit (30) connecting the body frame (3) and the rear arm (8), wherein the exhaust pipe (17,18,19) has an upright portion (19a) extending upward from below the pivot shaft (12), and wherein the cushion unit (30) is located below the pivot shaft (12) and has a longitudinally elongated shape.

2. Saddle type vehicle according to claim 1, **characterized by** a front exhaust pipe (17) connected to a front exhaust port (4e') of the engine (4), and a rear exhaust pipe (18) connected to a rear exhaust port (18), said front and rear exhaust pipes (17,18) being joined to form a collection exhaust pipe (19) having the upright portion (19a).
